Europäisches Patentamt

European Patent Office

Office européen des brevets

(19)

(11) Publication number: **0 242 698**
**B1**

# EUROPEAN PATENT SPECIFICATION

(12)

(45) Date of publication of the patent specification:
08.08.90

(51) Int. Cl.⁵: **F16B 37/04, F16B 5/00**

(21) Application number: 87105162.9

(22) Date of filing: 08.04.87

(54) Composite channel and plate nut assembly.

(30) Priority: 25.04.86 US 855712

(43) Date of publication of application:
28.10.87 Bulletin 87/44

(45) Publication of the grant of the patent:
08.08.90 Bulletin 90/32

(84) Designated Contracting States:
DE ES FR GB IT SE

(56) References cited:
EP-A- 0 005 434
EP-A- 0 127 537
US-A- 2 469 312
US-A- 3 695 324

(73) Proprietor: MICRODOT INC., 23 Old Kings Highway
South, Darien Connecticut 06820(US)

(72) Inventor: Berecz, Imre n.m.i., 26562 Shane Drive, El Toro
California 92630(US)

(74) Representative: Kügele, Bernhard et al, c/o
NOVAPAT-CABINET CHEREAU 9, Rue du Valais,
CH-1202 Genève(CH)

## Description

<u>FIELD OF INVENTION</u>

The present invention relates to a composite channel and plate nut assembly comprising a U-shaped channel defined by a web portion and spaced leg portions, and a plate nut, said channel having a plurality of apertures for engagement with portions of the plate nut, the latter having a threaded portion for the acceptance of a complementary bolt and a base flange seated on the web portion of said channel.

## BACKGROUND OF THE INVENTION

Fastening systems comprising a plate nut that floats relative to a supporting element to facilitate assembly of a screw therewith have been used as "blind" fasteners for some time in the aircraft industry. Such systems often comprise a plate nut and a channel which is riveted or otherwise permanently fastened to the "blind" side of a structural member. The channel generally has an aperture in its base surface which is oversize relative to the size of a bolt intended to be inserted therethrough. The floating plate nut is generally removable from its supporting channel.

It is desirable for the floating plate nut of such assemblies to be anchored to its supporting channel in a manner that maximizes the ability of the channel to resist reaction torque thereupon due to advancement of a bolt through the plate nut. This feature becomes critical when the channel is fabricated from plastic material. Known plate nut assemblies are not totally satisfactory in that they either sacrifice strength necessary to resist reaction torque on the channel or are unduly heavy or bulky.

Such known plate nut assemblies are described e.g. in US patent 2 469 312 wherein a nut is retained by clips which are engaged in side flanges of the plate whereby openings in approximately mid-hight of those flanges are provided which receive these clips. Another nut assembly is known from US patent 3 695 324 wherein each nut is located in a separate receptacle portion such that nut and receptacle are secured against rotation relative to each other by engagement of an ear portion of the nut base within openings in vertical flange portions of the receptacles.

## OBJECT OF THE INVENTION

It is the general object of the present invention to provide a channel plate nut assembly which provides higher resistance of the channel portion against the torque of the nut created upon insertion of bolts thereinto.

In particular, the object of the present invention is to provide a geometry of the engagement means between the nut and the channel such as to inhibit deterioration of the engaged portions of the channel by the torsional forces of the engaging portions of the nut.

<u>SUMMARY OF THE INVENTION</u>

The instant invention relates to an improved floating plate nut and composite channel assembly that is of minimum weight and bulk yet exhibits maximum resistance to reaction torque exerted by said nut upon advancement of a bolt thereinto.

This is accomplished by a composite channel and plate nut assembly of the type as set out above and which is further characterized in that said apertures in said web portion are located adjacent said leg portions whereby said leg portions define and are contiguous with the laterally outer walls of said apertures respectively, said base flange of said plate nut comprising a plurality of downwardly extending lugs acceptable in the apertures of said web portion respectively, the base flange and the lugs bearing against said leg portions whereby reaction forces upon threading of a bolt into said nut are accepted directly by said leg portions.

According to a particular embodiment of the present invention and in order to further improve the torque resistance of the channel plate nut assembly said leg portios have laterally aligned apertures therein for the acceptance of a pair of complementary extending retention ears on said nut.

## BRIEF DESCRIPTION OF THE DRAWINGS

Figure 1 is a top view of a composite plate nut channel assembly in accordance with an exemplary constructed embodiment of the present invention;

Figure 2 is a cross-sectional view taken along the line 2–2 of Fig. 1;

Figure 3 is a bottom view of the assembly of Fig. 1;

Figure 4 is a cross-sectional view taken along the line 4–4 of Fig. 1;

Figure 5 is a view, similar to Fig. 1, of a modified system for retaining the nut in the channel;

and Figure 6 is a view taken along the line 6–6 of Fig. 5.

## DETAILED DESCRIPTION OF THE PREFERRED EMBODIMENT OF THE INVENTION

In accordance with a constructed embodiment of the present invention, a composite plate nut assembly 20 comprises a channel 22 made from, for example, carbon fibre reinforced epoxy resin and a plate nut 24. The channel 22 is of U-shaped cross-section defined by a central web portion 26 and upstanding leg portions 28 and 30.

The nut 24 comprises a threaded barrel 32 having an integral base flange 34. Thle base flange 34 is provided with a plurality of integral downwardly extending lugs 36, 38, 40, and 42 that are accepted in complementary apertures 44, 46, 48 and 50 in the web portion 26 of the channel 22. It is to be noted that the apertures 40, 42, 44, and 46 are immediately adjacent the leg portions 28 and 30, respectively, of the channel 22. The nut 24 is retained on the web portion 26 of the channel 22 by a retainer spring 52 that overlies the base 34 of the nut 24 and is accepted in laterally aligned slots 54 and 56 in the flanges 28 and 30 of the channel 22, respectively.

In accordance with the instant invention, the outer wall portions of the aperture 44 and 46 are coplanar with an inner wall 60 of the leg portion 30. Similarly, the outer walls of the apertures 48 and 50 are coextensive with an inner wall 62 of the leg portion 28. Thus, the base flange 34 of the nut 24 bears against the inner walls 60 and 62 of the channel 22 while the lugs 36–42 on the nut 24 bear against the outer walls of the apertures 44–50 thereby maximizing the atilitiy of the channel 22 to resist torque exerted by the nut 24.

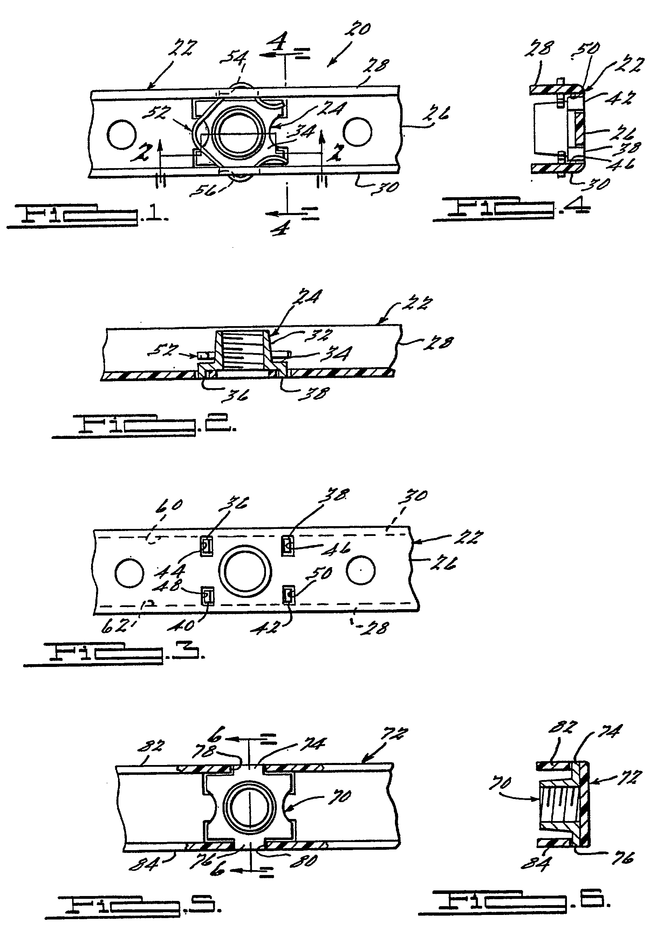

It is to be noted that, as seen in Fig. 3, only the apertures 42 and 44 adjacent the leg portions 28 and 30, respectively, provide for transmission of reaction torque on the nut 24 directly to the leg portion 28 and 30. Thus, while the provision of four apertures 36, 38, 40 and 42 maximizes the ability of the channel 22 to handle torque applied to the nut 24, due to both assembly and disassembly of a bolt (not shown) with the the nut 24, the critical feature is the provision of the two apertures 44 and 50 for the acceptance of the lugs 36 and 42, respectively, adjacent the flanges 30 and 28, respectively, whereby said flanges 30 and 28 provide a relatively large bearing surface to minimize unit pressure on the channel 22 incident to advancement of a bolt into the nut 24.

As seen in Figures 5 and 6, a modified embodiment of the present invention provides for retention of a nut 70 in a channel 72 by a pair of laterally extending ears 74 and 76 that are accepted in complementary apertures 78 and 80 in a pair of flanges 82 and 84 of the channel 72, respectively. In all other respects the nut 70 and channel 72 are similar to the nut 24 and channel 22.

## Claims

1. Composite channel and plate nut assembly comprising a U-shaped channel (22) defined by a web portion (26) and spaced leg portions (28, 30), and a plate nut (24), said channel (22) having a plurality of apertures for engagement with portions of the plate nut (24), the latter having a threaded portion (32) for the acceptance of a complementary bolt and a base flange (34) seated on the web portion (26) of said channel (22), characterized in that said apertures (44, 46, 48, 50) in said web portion (26) are located adjacent said leg portions (28, 30) whereby said leg portions (28, 30) define and are contiguous with the laterally outer wall of said apertures (44, 46, 48, 50) respectively, said base flange (34) of said plate nut (24) comprising a plurality of downwardly extending lugs (36, 38, 40, 42) acceptable in the apertures of said web portions (26) respectively, the base flange (34) and the lugs (36, 38, 40, 42) bearing against said leg portions (28, 30) whereby reaction forces upon threading of a bolt into said nut (24) are accepted directly by said leg portions (28, 30).

2. Composite channel in accordance with claim 1, characterized in that said leg portions (28, 30) have laterally aligned apertures (78, 80) therein for the acceptance of a pair of complementary extending retention ears (74, 76) on said nut (24).

## Patenansprüche

1. Verbundstoffprofil und Blechmutter umfassende Montagegruppe mit einem durch einen Band-Teil (26) und Fuss-Teilen (28, 30) gebildeten U-förmigen Kanal (22) und einer Blechmutter (24), wobei jener Kanal (22) eine Mehrzahl von Öffnungen für den Eingriff von Teilen der Blechmutter (24) aufweist, welche zur Aufnahme eines passenden Bolzens einen, ein Gewinde aufweisenden Teil (32), sowie einen Grundflansch (34) besitzt, der auf dem Band-Teil (26) jenes Kanals (22) aufsitzt, dadurch gekennzeichnet, dass jene Öffnungen (44, 46, 48, 50) in jenem Band-Teil (26) in der Nachbarschaft jener Fuss-Teile (28, 50) angeordnet sind, wobei diese Fuss-Teile (28, 30) die äusseren Wände jener Öffnungen (44, 46, 48, 50) definieren und an diese angrenzen, wobei jener Grundflansch (34) der Blechmutter (24) eine Mehrzahl von sich nach unten erstreckenden Fortsätzen (36, 38, 40, 42) aufweist, welche in den Öffnungen der Band-Teile (26) Aufnahme finden und der Grundflansch (34) und die Fortsätze (36, 38, 40, 42) sich an jenen Fuss-Teilen (28, 30) abstützen, wobei Reaktionskräfte die bei Einschrauben eines Bolzens in die Mutter (24) auftreten, direkt von den Fuss-Teilen (28, 30) aufgenommen werden.

2. Verbundstoffprofil nach Anspruch 1, dadurch gekennzeichnet, dass jene Fuss-Teile (28, 30) in sich seitlich ausgerichtete Öffnungen (78, 80) für die Aufnahme eines Paares von passend ausgerichteten Rückhalteohren (74, 76) der Mutter (24) aufweisen.

## Revendications

1. Profil en matière composite et assemblage avec écrou de tôle, ayant un canal en forme de U (22) défini par une partie de bande (26) et des parties de jambe (28, 30) et un écrou de tôle, ledit canal (22) ayant une pluralité d'ouvertures pour l'engagement avec des parties de l'écrou de tôle (24), ce dernier ayant une partie filetée (32) pour recevoir un boulon complémentaire ainsi qu'un flasque de base (34) assis sur la partie de bande (26) du canal (22), caractérisé en ce que lesdites ouvertures (44, 46, 48, 50) dans ladite partie de bande (26) sont arrangées de façon adjacente aux parties de jambes, (28, 30) si bien que lesdites parties de jambes (28, 30) definissent et sont contigues aux cloisons extérieures des ouvertures (44, 46, 48, 50) respectivement, ledit flasque de base (34) dudit écrou de tôle comprenant une pluralité des excroissances (36, 38, 40, 42) s'étendant vers le bas et s'appuiant contre lesdites parties de jambes (28, 30) de façon tel que des forces de réaction due au au vissage d'un boulon dans ledit écrou sont reçues directemment par lesdites parties de jambes (28, 30).

2. Profil selon la revendication 1, caractérisé en ce que lesdites parties de jambes (28, 30) comportent en elles des ouvertures alignées lateralement pour recevoir une paire d'oreilles de retention complementaires (74, 76) sur ledit écrou.

EP 0 242 698 B1

FIG.1.

FIG.2.

FIG.3.

FIG.4.

FIG.5.

FIG.6.